# EUROPÄISCHE PATENTSCHRIFT

(11) **EP 1 322 198 B1**
(45) Veröffentlichungstag und Bekanntmachung des Hinweises auf die Patenterteilung: **15.02.2006**
(21) Anmeldenummer: 01980454.1
(22) Anmeldetag: 28.09.2001
(51) Int. Cl.: A45C 13/02, G06F 1/16

(54) **TASCHE MIT STABILISIERENDEN UND STOSSDÄMPFENDEN RAHMENELEMENTEN**
BAG COMPRISING STABILISING AND SHOCK ABSORBING FRAME ELEMENTS
SAC COMPORTANT DES ELEMENTS DE CADRE A EFFET STABILISATEUR ET AMORTISSEUR

(30) Priorität: 28.09.2000 DE 10048084
(43) Veröffentlichungstag der Anmeldung: 02.07.2003
(73) Patentinhaber: Offermann GmbH & Co. KG, 51429 Bergisch Gladbach (DE)
(72) Erfinder: OFFERMANN, Hubert, 51429 Bergisch Gladbach (DE)
(74) Vertreter: Maxton Langmaack & Partner
(86) Internationale Anmeldenummer: PCT/EP2001/011271
(87) Internationale Veröffentlichungsnummer: WO 2002/026074

(56) Entgegenhaltungen:
- WO-A-99/39607
- US-A- 5 676 223
- US-A- 5 884 768

## Beschreibung

Zum Transport von Akten und Laptops sind Taschen bekannt, die einen steifen aus Holz, Metall oder Kunststoff bestehenden Rahmen aufweisen. Derartige Taschen sind einerseits sehr robust, wobei sie jedoch andererseits den Nachteil eines hohen Gewichtes aufweisen, der vor dem Hintergrund des hohen Eigengewichts eines Laptops nicht vernachlässigt werden kann.

Es sind außerdem Taschen bekannt, die keinen versteifenden Rahmen aufweisen, so daß derartige Taschen nicht formstabil sind.

Darüber hinaus sind Taschen bekannt, die ausschließlich oder zusätzlich zu einem steifen Rahmen flache Schaumstoffelemente aufweisen, die zwischen einer Außen- und Innenhülle eingearbeitet sind. Die flachen Schaumstoffelemente weisen bei geringer Dicke keine ausreichende stoßdämpfende Wirkung auf und wirken auch nur gering stabilisierend. Bei einer großen Dicke der Schaumstoffelemente wird die Tasche zu groß bzw. der Innenraum der Tasche wird zu klein.

Weiterhin ist es bekannt, Taschen oder Aktenkoffer zu verwenden, die am Rahmen befestigte Schlaufen zur Aufnahme des Laptops aufweisen. Der Laptop wird in die Schlaufen eingehängt, die einen Stoßschutz gewährleisten sollen, wobei bei einem nicht ausreichenden Abstand vom Boden der Tasche der Laptop beschädigt wird.

Ferner weisen die bekannten Taschen den Nachteil auf, daß aufgrund des notwendigen Abstandes zwischen dem Boden der Tasche und dem eingehängten Laptop diese Taschen eine größere Baugröße aufweisen. Weiterhin stören die Schlaufen, wenn der Laptop nicht eingehängt ist.

WO 99/39607 offenbart eine Tasche für ein stoßempfindliches Gerät, wobei die Tasche eine Außenhülle aufweist, die an ihrer Innenseite mit einem Rahmelement in Verbindung steht.

Aufgabe der Erfindung ist es eine Tasche zum Transport von stoßempfindlichen Geräten zu bilden, die formstabil ausgebildet ist und die einen hohen Schutz vor Beschädigungen der Geräte durch Stöße bietet, wobei die Tasche eine geringe Baugröße bei gleichzeitig geringem Gewicht aufweisen sollte.

Die Aufgabe wird erfindungsgemäß gelöst durch eine Tasche nach Anspruch 1.

Ein Vorteil der Erfindung besteht darin, daß zylinder- oder rohrförmig ausgebildete Rahmenelemente bei gleichem Materialeinsatz ein höheres Widerstandsmoment gegen Biegung auf als anders geformte Rahmenelemente, beispielsweise flache, stabförmig geformte Rahmenelemente. Die erfindungsgemäßen Rahmenelemente erlauben daher die Formstabilität einer Tasche mit einem geringeren Materialeinsatz zu erzielen und resultieren in einem niedrigeren Gewicht. Gleichzeitig gewährleisten rohrförmige Elemente einen besseren Schutz vor Stoßbelastungen im Gegensatz zu anders geformte Rahmenelementen, beispielsweise flachen, stabförmig geformten Rahmenelementen. Besonders vorteilhaft sind derartige zylindrische Rahmenelemente, da sie eine stabilisierende und dämpfende Wirkung aufweisen. Vor allem im Gegensatz zu den bekannten flachen Schaumstoffelementen weisen die erfindungsgemäßen Rahmenelemente ein höheres Widerstandsmoment gegen Biegung auf, wodurch die Tasche stabilisiert und in Form gehalten wird. Vorteilhaft ist es, wenn das Rahmenelement stabilisierend und/oder dämpfend ausgebildet ist, so daß die Tasche formstabil ist und das stoßempfindliche Gerät gegen Stöße geschützt ist. Zylindrische bzw. rohrförmige Rahmenelemente weisen ein höheres Widerstandsmoment gegen Biegung auf als beispielsweise stabförmige Rahmenelemente bei gleichem Materialeinsatz. Es ist somit möglich eine vorgegebene Formstabilität einer Tasche durch den Einsatz von rohrförmigen Rahmenelementen bei einem geringeren Materialeinsatz zu erzielen im Vergleich zu der Verwendung von stabförmigen oder flachen Rahmenelementen. Durch den geringeren notwendigen Materialeinsatz, an beispielsweise Aluminium, für die Rahmenelemente weisen die erfindungsgemäßen Taschen ein geringeres Gewicht auf bei gleicher Formstabilität zu den bekannten Taschen, wobei zusätzlich durch die rohrförmige Gestaltung der Rahmenelemente die erfindungsgemäßen Taschen einen zusätzlichen Schutz vor Stößen bieten. Weiterhin ist vorteilhaft, daß die Größe der Tasche optimal an die Größe des stoßempfindlichen Gerätes angepaßt werden kann, da das annähernd zylindrische Rahmenelement der Tasche Stabilität verleit und zusätzlich das Gerät vor Stößen schützt. Ein Abstand zwischen dem Boden der Tasche und einem in Schlaufen eingehängten Gerät ist nicht notwendig, wodurch die Baugröße der Tasche reduziert werden kann.

Taschen im Sinne der Erfindung sind beispielsweise Mappen, Aktenkoffer, Umhängetaschen oder dergleichen.

Stoßempfindliche Geräte im Sinne der Erfindung sind beispielsweise Laptops, Audio- und Videogeräte wie Videokameras, Fotoapparate, CD-Player oder Ähnliches.

In der Erfindung ist vorgesehen, daß das Rahmenelement rohrförmig ausgebildet ist. Ein derartig ausgebildetes Rahmenelement hat den Vorteil, daß Stöße besser aufgefangen werden. Diese Wirkung wird verstärkt, wenn das annähernd rohrförmige Rahmenelement an seinen Enden jeweils zumindest annähernd luftdicht verschlossen ist. Hierdurch wird nicht nur eine Stoßabsorption durch die rohrförmige Gestaltung des Rahmenelementes sondern auch durch das eingeschlossene Luftpolster erzielt. Weiterhin wird eine Stabilisierung der Tasche erreicht, da das erfindungsgemäße Rahmenelement ein hohes Widerstandsmoment aufweist.

In vorteilhafter Ausgestaltung der Erfindung ist vorgesehen, daß das rohrförmige Rahmenelement aus einem Leichtmetall wie beispielsweise Aluminium, Kunststoff, Kautschuk, Schaumstoff und/oder einer Kombination dieser Materialien besteht.

Rahmenelemente aus Aluminium oder festem Kunststoff, beispielsweise faserverstärktem Kunststoff, weisen den Vorteil einer hohen stabilisierenden Wirkung auf, wobei die stoßdämpfende Wirkung geringer ist und zu einer irreversiblen Verformung führen kann. Rahmenelemente aus Schaumstoff, Kunststoff, Kautschuk, insbesondere Naturkautschuk, weisen den Vorteil einer höheren dämpfenden Wirkung auf, wobei die stabilisierende Wirkung geringer ist, Belastungen aber in der Regel nicht zu einer irreversiblen Verformung führen. Eine Kombination von hauptsächlich stabilisierenden und dämpfenden Materialien, beispielsweise die Kombination Aluminium/Schaumstoff, kombiniert die positiven Materialeigenschaften eines stärker stabilisierenden Materials (Aluminium) mit denen eines stärker dämpfenden Materials (Schaumstoff).

Es ist beispielsweise möglich zur Erzielung der stabilisierenden Wirkung ein Rahmenelement aus Aluminium zu verwenden, daß auf seinem Außenumfang zur Stoßabsorption eine Schaumstoffhülle aufweist. Durch das Aluminiumrohr werden starke Stöße irreversibel abgedämpft, d.h. das Rohr bleibt nach dem Stoß verformt. Durch den Schaumstoff werden leichte Stöße reversibel abgedämpft, d.h. der Schaumstoff nimmt zumindest annähernd seine ursprüngliche Form an.

Durch die alleinige oder zusätzliche Verwendung von Schaumstoff für Rahmenelemente wird eine Verbesserung des Stoß- und Schlagabsorption erzielt. Geschlossenporiger Schaumstoff nimmt weiterhin auch keine Feuchtigkeit auf.

Es ist auch möglich anstatt eines Schaumstoffs einen festeren Kunststoff einzusetzen, wobei der Kunststoff eine ausreichende Federwirkung aufweisen muß.

In zweckmäßiger Ausgestaltung der Erfindung ist vorgesehen, daß das rohrförmige Rahmenelement einen Außendurchmesser von 5 mm bis 50 mm, vorzugsweise 10 mm aufweist.

In weiterer zweckmäßiger Ausgestaltung der Erfindung ist vorgesehen, daß das rohrförmige Rahmenelement eine Wandstärke von 0,5 mm bis 15 mm, vorzugsweise 1 mm aufweist.

In vorteilhafter Ausgestaltung der Erfindung ist vorgesehen, daß das rohrförmige Rahmenelement annähernd einen achtförmigen Querschnitt aufweist. Rahmenelemente mit einem rohrförmigen oder achtförmigen Querschnitt weisen eine hohe Federwirkung und ein hohes Widerstandsmoment gegen Biegemomente auf. Rahmenelemente mit einem achtförmigen Querschnitt weisen im Vergleich zu einem rohrförmigen Schlauch eine geringere Dicke und somit geringere Baugröße auf. In weiterer Ausgestaltung der Erfindung ist es auch möglich, daß das Rahmenelement ein Vielfaches eines achtförmigen Querschnitts aufweist.

In der Erfindung ist vorgesehen, daß durch die Unterteilung des rohrförmigen Rahmenelementes über einen großen Bereich entlang seiner Längsachse mittels wenigstens einer Naht, das rohrförmige Rahmenelement in zwei Kammern geteilt wird. Es kann zweckmäßig sein ein rohrförmiges Rahmenelement mit mehr als einer Längsnaht zu versehen, um beispielsweise ein Rahmenelement mit drei oder mehr Kammern zu erzeugen.

In weiterer vorteilhafter Ausgestaltung der Erfindung ist vorgesehen, daß die Naht genäht, geschweißt oder geklebt wird.

In zweckmäßiger Ausgestaltung der Erfindung ist vorgesehen, daß das rohrförmige Rahmenelement auf seinem Außenumfang mit einem Gewebe versehen ist. Das Gewebe kann beispielsweise aus optischen Gründen ein Futterstoff sein.

In vorteilhafter Ausgestaltung der Erfindung ist vorgesehen, daß das rohrförmige Rahmenelement zumindest in Teilbereichen des Außenumfangs mit einem Klettverschluß versehen ist. Eine derartige Ausgestaltung ist vorteilhaft, da das Rahmenelement beispielsweise an den Seitenwänden der Außenhülle an einem zugeordneten Klettverschluß befestigt werden kann.

In weiterer vorteilhafter Ausgestaltung der Erfindung ist vorgesehen, daß das rohrförmige Rahmenelement wenigstens an einem seiner Enden mit einem Klettverschluß versehen ist. Ein an den Enden des Schlauches angeordneter Klettverschluß hat den Vorteil, daß der Schlauch zur Unterteilung der Tasche eingesetzt werden kann, indem der Klettverschluß an jedem Ende des Rahmenelementes mit der Ober- und/oder Unterseite bzw. den Seitenteilen der Tasche verbunden wird.

In zweckmäßiger Ausgestaltung der Erfindung ist vorgesehen, daß zusätzlich zu der Außenhülle ein Rahmen aus Holz, Metall, und/oder Kunststoff vorgesehen ist. Eine derart gestaltete Kombination von Außenhülle und Rahmen hat den Vorteil, daß der Rahmen einerseits eine hohe Steifigkeit aufweist und andererseits das stoßempfindliche Gerät durch die Verwendung von rohrförmigen Rahmenelementen als Polsterung vor Stößen geschützt ist und zusätzlich zum Rahmen versteift wird.

In weiterer vorteilhafter Ausgestaltung der Erfindung ist vorgesehen, daß die Außenhülle aus Kunststoff, Leder, Gewebe und/oder einer Folie gebildet wird. Die Verwendung eines Gewebes und/oder einer Folie als Außenhülle hat den Vorteil, daß eine derartige Außenhülle leicht ist, wodurch die Tasche ein niedriges Gesamtgewicht aufweist. Die annähernd rohrförmigen Rahmenelemente haben zusätzlich zu der stoßdämpfenden Wirkung auch eine stabilisierende Funktion, so daß eine Tasche mit an der Außenhülle befestigten oder in diese eingearbeiteten Rahmenelementen nahezu eigensteif ist. Die Verbindung der Rahmenelemente mit der Außenhülle kann durch Vernähen, Verschweißen und/oder Verkleben erfolgen.

In zweckmäßiger Ausgestaltung der Erfindung ist vorgesehen, daß die Außenhülle auf der Innenseite wenigstens ein Befestigungselement für ein Rahmenelement aufweist.

In weiterer zweckmäßiger Ausgestaltung der Erfindung ist vorgesehen, daß das Befestigungselement als Klettverschluß ausgebildet ist.

In weiterer zweckmäßiger Ausgestaltung der Erfindung ist vorgesehen, daß das Befestigungselement als Druckknopf ausgebildet ist. In weiterer Ausgestaltung der Erfindung kann das Befestigungselement auch als Wirbel- oder Drehverschluß ausgebildet sein.

In vorteilhafter Ausgestaltung der Erfindung ist vorgesehen, daß die Rahmenelemente zwischen einer Außenhülle und einer Innenhülle angeordnet sind. Hierdurch sind die Rahmenelemente selbst für den Benutzer nicht sichtbar und können unverrückbar fixiert werden.

Weiterhin ist es vorteilhaft, wenn wenigstens ein Rahmenelement in einer im Rahmen vorgesehene Aussparung angeordnet ist. Eine derartige Gestaltung hat den Vorteil, daß Rahmenelemente nur an den Stellen im Rahmen optimal positioniert werden, wo eine Schutzwirkung und/oder Stabilisierungswirkung benötigt wird.

In weiterer vorteilhafter Ausgestaltung der Erfindung ist vorgesehen, daß wenigstens zwei Rahmenelemente nebeneinander angeordnet sind. Ferner können die Rahmenelemente nicht verrutschen.

In vorteilhafter Ausgestaltung der Erfindung ist vorgesehen, daß wenigstens an der Unterseite der Tasche oder im Boden Rahmenelemente angeordnet sind.

Die Erfindung wird anhand schematischer Zeichnungen eines Ausführungsbeispiels erläutert. Es zeigen:
- Fig. 1: eine perspektivische Ansicht einer erfindungsgemäßen Tasche,
- Fig. 2: ein rohrförmiges Rahmenelement,
- Fig. 3: ein im Querschnitt achtförmiges Rahmenelement,
- Fig. 4: ein Rahmenelement mit Befestigungsmittel,
- Fig. 5: eine perspektivische Ansicht einer weiteren Ausführungsform der erfindungsgemäßen Tasche,
- Fig. 6: ein weiteres Rahmenelement und
- Fig. 7: eine weitere Ausgestaltung eines Rahmenelementes.

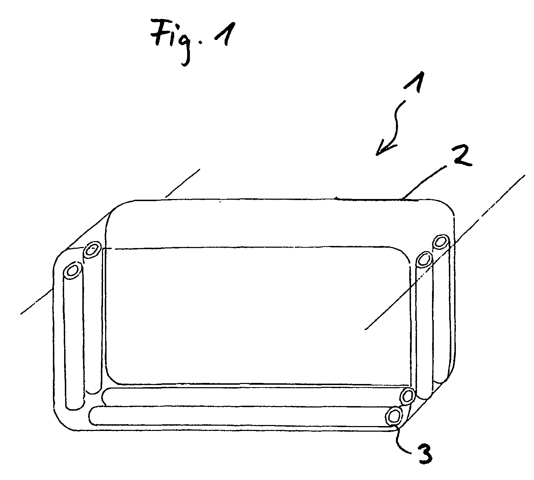

Fig. 1 zeigt eine Tasche 1 für ein stoßempfindliches Gerät, insbesondere für einen Laptop, wobei die Tasche eine Außenhülle 2 aufweist, die an Ihrer Innenseite zumindest in Teilbereichen annähernd rohrförmige Rahmenelemente 3 aufweist. Stoßempfindliche Geräte im Sinne der Erfindung sind beispielsweise Laptops, Audio- und Videogeräte wie Videokameras, Fotoapparate, CD-Player und ähnliches. Um einen sicheren Schutz des Gerätes über dessen ganze Breite zu gewährleisten, sind jeweils zwei Rahmenelemente 3 nebeneinander angeordnet.

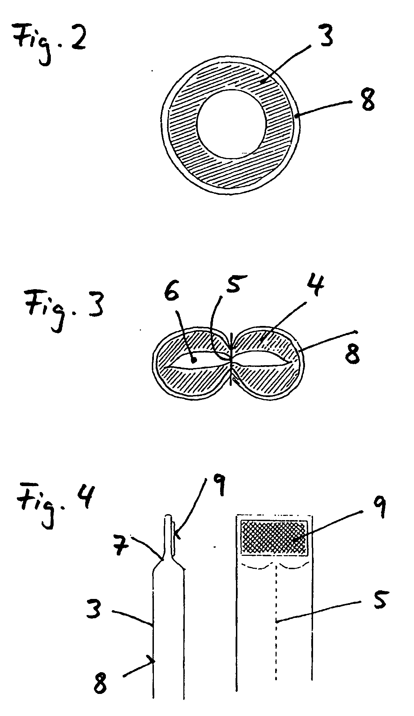

Fig. 2 zeigt das erfindungsgemäße Rahmenelement 3, das als Rohr oder Schlauch ausgebildet ist. Derartige Rahmenelemente können stabilisieren und Stöße gut abfedern. Vorteilhaft ist es, wenn das Rohr oder der Schlauch aus Aluminium, Schaumstoff, Kunststoff und/oder Naturkautschuk besteht. Durch die Verwendung von Schaumstoff wird eine weitere Verbesserung des Stoß- und Schlagabsorption erzielt. Geschlossenporiger Schaumstoff nimmt darüber hinaus auch keine Feuchtigkeit auf. Das Rahmenelement 3 kann auf dem Außenumfang ein Gewebe 8 aufweisen.

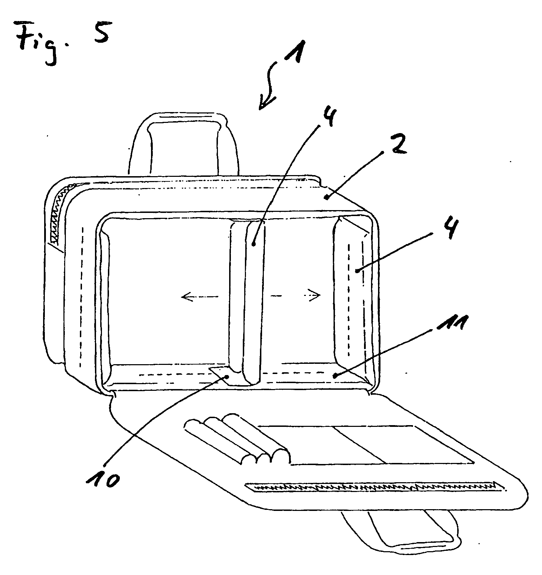

Fig. 3 zeigt ein rohrförmiges Rahmenelement, das annähernd einen achtförmigen Querschnitt 4 aufweist. Rohrförmige Rahmenelemente mit einem achtförmigen Querschnitt 4 weisen im Vergleich zu einem rohrförmigen Rahmenelement eine geringere Dicke und somit geringere Baugröße auf. Die Unterteilung des rohrförmigen Rahmenelementes mit dem achtförmigen Querschnitt wird mittels einer Naht erreicht, die über einen großen Bereich entlang seiner Längsachse verläuft. Durch die Naht 5 wird das rohrförmige Rahmenelement in zwei Kammern 6 geteilt. Es kann zweckmäßig sein ein rohrförmiges Rahmenelement mit mehr als einer Längsnaht zu versehen, um beispielsweise ein Rahmenelement 3 mit drei Kammern zu erzeugen. Die Naht 5 kann genäht, geschweißt oder geklebt werden

Fig. 4 ist zu entnehmen, daß die abfedernde und dämpfende Wirkung des Rahmenelementes 3 verstärkt wird, wenn bei Einsatz von Schaumstoff, Naturkautschuk, Kunststoff oder ähnlichen Materialien das annähernd rohrförmige Rahmenelement 3 an seinen Enden 7 jeweils zumindest annähernd luftdicht verschlossen ist. Hierdurch wird nicht nur eine Stoßabsorption durch die rohrförmige Gestaltung des Rahmenelementes 3 sondern auch durch das eingeschlossene Luftpolster in den Kammern 6 erzielt. Es ist vorgesehen, daß das rohrförmige Rahmenelement 3 auf seinem Außenumfang mit einem Gewebe 8 versehen ist.

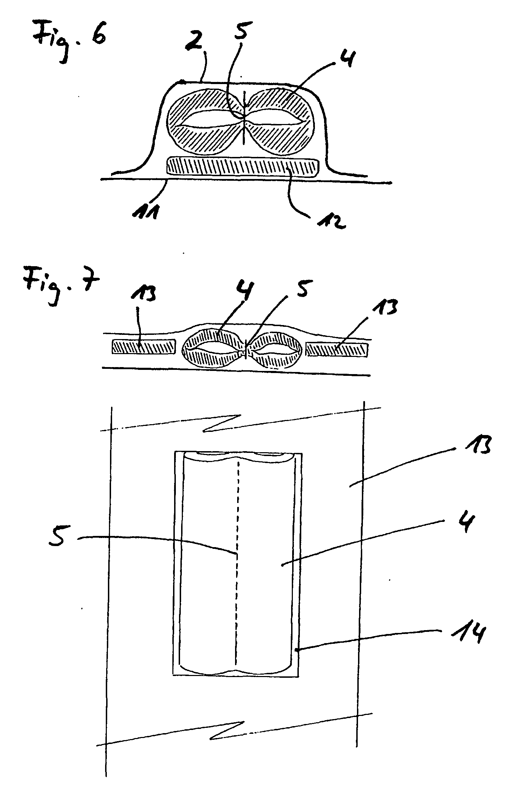

Vorteilhaft ist es, wenn das rohrförmige Rahmenelement 4 an seinen Enden mit einem Klettverschluß 9 versehen ist. Hierdurch kann das Rahmenelement 3 beispielsweise an den Seitenwänden der Außenhülle 1 an einem zugeordneten Klettverschluß 10 befestigt werden. Der zugeordnete Klettverschluß 10 kann an der Innenhülle 11 der Tasche 1 angeordnet sein (Fig. 5).

Fig. 5 zeigt, daß ein an den Enden des rohrförmigen Rahmenelementes 4 angeordneter Klettverschluß 9 den Vorteil hat, daß das rohrförmige Rahmenelement 4 zur Unterteilung der Tasche 1 eingesetzt werden kann, indem der Klettverschluß 9 an jedem Ende des Rahmenelementes 4 mit der Ober- und/oder Unterseite bzw. den Seitenteilen der Tasche 1 verbunden wird.

Die Außenhülle 2 ist ein Rahmen, der beispielsweise aus Holz, Metall und/oder Kunststoff ausgebildet ist. Ein derartiger Rahmen weist eine hohe Steifigkeit auf. Die Außenhülle 2 kann auch aus einem Gewebe, Leder und/oder einer Folie gebildet sein, wodurch die Tasche ein niedriges Gesamtgewicht aufweist. Die annähernd rohrförmigen Rahmenelemente 4 haben bei einer derartig gebildeten Tasche 1 zusätzlich zu der stoßdämpfenden Wirkung auch eine stabilisierende Funktion, so daß eine Tasche 1 mit an der Außenhülle 2 befestigten oder in diese eingearbeiteten Rahmenelementen 4 nahezu eigensteif ist. Die Verbindung der Rahmenelemente 3 mit der Außenhülle kann durch Vernähen, Verschweißen und/oder Verkleben erfolgen bzw. die Rahmenelemente 4 werden zwischen Außen- 2 und Innenhülle 11 lose eingelegt und/oder an der Außen- 2 und Innenhülle 11 befestigt.

## Patentansprüche

1. Tasche (1) für ein stoßempfindliches Gerät, insbesondere für einen Laptop, wobei die Tasche (1) eine Außenhülle (2) aufweist, die an ihrer Innenseite zumindest in Teilbereichen mit wenigstens einem annähernd zylindrischen rohrförmig ausgebildeten Rahmenelement (3) in Verbindung steht, **dadurch gekennzeichnet, daß** durch Unterteilung des rohrförmigen stabilisierenden und dämpfenden Rahmenelementes (3) über einen großen Bereich entlang seiner Längsachse mittels wenigstens einer Naht (5) wenigstens zwei Kammern aufweist.

2. Tasche (1) für ein stoßempfindliches Gerät nach Anspruch 1, **dadurch gekennzeichnet, daß** das rohrförmige Rahmenelement (3)anhähernd einen achtförmigen Querschnitt (4) aufweist.

3. Tasche (1) für ein stoßempfindliches Gerät nach einem der Ansprüche 1 bis 2, **dadurch gekennzeichnet, daß** das rohrförmige Rahmenelement (3) ein Vielfaches eines achtförmigen Querschnitts aufweist.

4. Tasche (1) für ein stoßempfindliches Gerät nach einem der Ansprüche 1 bis 3, **dadurch gekennzeichnet, daß** die Naht (5) genäht, geschweißt oder geklebt wird.

5. Tasche (1) für ein stoßempfindliches Gerät nach Anspruch 1 bis 4, **dadurch gekennzeichnet, daß** das rohrförmige Rahmenelement (3) einen Außendurchmesser von 5 mm bis 50 mm, vorzugsweise 10 mm aufweist.

6. Tasche (1) für ein stoßempfindliches Gerät nach einem der Ansprüche 1 bis 5, **dadurch gekennzeichnet, daß** das rohrförmige Rahmenelement (3) eine Wandstärke von 0,5 mm bis 15 mm, vorzugsweise 1 mm aufweist.

7. Tasche (1) für ein stoßempfindliches Gerät nach einem der Ansprüche 1 bis 6, **dadurch gekennzeichnet, daß** das rohrförmige Rahmenelement (3) aus Leichtmetall, Aluminium, Kunststoff, Kautschuk, Schaumstoff, Gummi und/oder einer Kombination der Materialien besteht.

8. Tasche (1) für ein stoßempfindliches Gerät nach einem der Ansprüche 1 bis 7, **dadurch gekennzeichnet, daß** das rohrförmige Rahmenelement (3) auf seinem Außenumfang mit einem Gewebe versehen ist.

9. Tasche (1) für ein stoßempfindliches Gerät nach einem der Ansprüche 1 bis 8, **dadurch gekennzeichnet**e daß das rohrförmige Rahmenelement (3) zumindest in Teilbereichen des Außenumfangs mit einem Klettverschluß versehen ist.

10. Tasche (1) für ein stoßempfindliches Gerät nach einem der Ansprüche 1 bis 9, **dadurch gekennzeichnet, daß** das rohrförmige Rahmenelement (3) wenigstens an einem seiner Enden (7) mit einem Klettverschluß (9) versehen ist.

11. Tasche (1) für ein stoßempfindliches Gerät nach einem der Ansprüche 1 bis 10, **dadurch gekennzeichnet, daß** zusätzlich zu der Außenhülle (2) ein Rahmen aus Holz, Metall und/oder Kunststoff vorgesehen ist.

12. Tasche (1) für ein stoßempfindliches Gerät nach einem der Ansprüche 1 bis 10, **dadurch gekennzeichnet, daß** die Außenhülle (2) aus Kunststoff, Leder, Gewebe und/oder einer Folie gebildet wird.

13. Tasche (1) für ein stoßempfindliches Gerät nach einem der Ansprüche 1 bis 12, **dadurch gekennzeichnet, daß** die Außenhülle (2) auf der Innenseite wenigstens ein Befestigungselement für ein Rahmenelement aufweist.

14. Tasche (1) für ein stoßempfindliches Gerät nach einem der Ansprüche 1 bis 13, **dadurch gekennzeichnet, daß** das Befestigungselement als Klettverschluß (10) ausgebildet ist.

15. Tasche (1) für ein stoßempfindliches Gerät nach einem der Ansprüche 1 bis 14, **dadurch gekennzeichnet, daß** das Befestigungselement als Druckknopf ausgebildet ist.

16. Tasche (1) für ein stoßempfindliches Gerät nach einem der Ansprüche 1 bis 15, **dadurch gekennzeichnet, daß** die Rahmenelemente zwischen einer Außenhülle (2) und einer Innenhülle (11) angeordnet sind.

17. Tasche (1) für ein stoßempfindliches Gerät nach einem der Ansprüche 1 bis 16, **dadurch gekennzeichnet, daß** wenigstens zwei Rahmenelemente (3) nebeneinander angeordnet sind.

18. Tasche (1) für ein stoßempfindliches Gerät nach einem der Ansprüche 1 bis 17, **dadurch gekennzeichnet, daß** wenigstens an der Unterseite der Tasche Rahmenelemente (3) angeordnet sind.

19. Tasche (1) für ein stoßempfindliches Gerät nach einem der Ansprüche 1 bis 18, **dadurch gekennzeichnet, daß** die Enden des rohrförmigen Rahmenelementes (3) jeweils zumindest annähernd luftdicht verschlossen sind.

20. Tasche (1) für ein stoßempfindliches Gerät nach einem der Ansprüche 1 bis 19, **dadurch gekennzeichnet, daß** wenigstens ein Rahmenelement (3) in einer in der Außenhülle (2) und/oder im Rahmen (13) vorgesehene Aussparung (14) angeordnet ist.

## Claims

1. A case (1) for a shock-sensitive apparatus, in particular for a laptop, the case (1) having an outer casing (2) which is connected on its inside at least in partial regions to at least one approximately cylindrical tubular frame element (3), **characterised in that** by subdividing the tubular stabilising and dampening frame element (3) over a large region along its longitudinal axis by means of at least one seam (5) [the frame element] has at least two chambers.

2. A case (1) for a shock-sensitive apparatus according to Claim 1, **characterised in that** the tubular frame element (3) has approximately a figure-of-eight-shaped cross-section (4).

3. A case (1) for a shock-sensitive apparatus according to one of Claims 1 to 2, **characterised in that** the tubular frame element (3) has a multiple of a figure-of-eight-shaped cross-section.

4. A case (1) for a shock-sensitive apparatus according to one of Claims 1 to 3, **characterised in that** the seam (5) is sewn, bonded or glued.

5. A case (1) for a shock-sensitive apparatus according to Claims 1 to 4, **characterised in that** the tubular frame element (3) has an external diameter of 5 mm to 50 mm, preferably 10 mm.

6. A case (1) for a shock-sensitive apparatus according to one of Claims 1 to 5, **characterised in that** the tubular frame element (3) has a wall thickness of 0.5 mm to 15 mm, preferably 1 mm.

7. A case (1) for a shock-sensitive apparatus according to one of Claims 1 to 6, **characterised in that** the tubular frame element (3) is made of lightweight metal, aluminium, plastics material, rubber, foamed material, vulcanised rubber and/or a combination of these materials.

8. A case (1) for a shock-sensitive apparatus according to one of Claims 1 to 7, **characterised in that** the tubular frame element (3) is provided on its outer periphery with a fabric.

9. A case (1) for a shock-sensitive apparatus according to one of Claims 1 to 8, **characterised in that** the tubular frame element (3) is provided with a hook-and-loop fastener at least in partial regions of the outer periphery.

10. A case (1) for a shock-sensitive apparatus according to one of Claims 1 to 9, **characterised in that** the tubular frame element (3) is provided with a hook-and-loop fastener (9) at least at one of its ends (7).

11. A case (1) for a shock-sensitive apparatus according to one of Claims 1 to 10, **characterised in that** in addition to the outer casing (2) a frame of wood, metal and/or plastics material is provided.

12. A case (1) for a shock-sensitive apparatus according to one of Claims 1 to 10, **characterised in that** the outer casing (2) is made of plastics material, leather, fabric and/or a film.

13. A case (1) for a shock-sensitive apparatus according to one of Claims 1 to 12, **characterised in that** the outer casing (2) has on the inside at least one fastening element for a frame element.

14. A case (1) for a shock-sensitive apparatus according to one of Claims 1 to 13, **characterised in that** the fastening element is in the form of a hook-and-loop fastener (10).

15. A case (1) for a shock-sensitive apparatus according to one of Claims 1 to 14, **characterised in that** the fastening element is in the form of a pushbutton.

16. A case (1) for a shock-sensitive apparatus according to one of Claims 1 to 15, **characterised in that** the frame elements are located between an outer casing (2) and an inner casing (11).

17. A case (1) for a shock-sensitive apparatus according to one of Claims 1 to 16, **characterised in that** at least two frame elements (3) are arranged next to each other.

18. A case (1) for a shock-sensitive apparatus according to one of Claims 1 to 17, **characterised in that** frame elements (3) are arranged at least on the underside of the case.

19. A case (1) for a shock-sensitive apparatus according to one of Claims 1 to 18, **characterised in that** the ends of the tubular frame element (3) are each at least approximately sealed airtight.

20. A case (1) for a shock-sensitive apparatus according to one of Claims 1 to 19, **characterised in that** at least one frame element (3) is arranged in a recess (14) provided in the outer casing (2) and/or in the frame (13).

## Revendications

1. Trousse (1) pour un appareil sensible aux chocs, en particulier pour un ordinateur portable, la trousse (1) présentant une enveloppe extérieure (2) qui sur sa face intérieure, du moins dans des zones partielles, est reliée à au moins un élément de cadre (3) tubulaire sensiblement cylindrique,
**caractérisée en ce que** l'élément de cadre (3) tubulaire stabilisateur et amortisseur présente au moins deux chambres grâce à sa division sur une grande zone le long de son axe longitudinal au moyen d'au moins une couture (5).

2. Trousse (1) pour un appareil sensible aux chocs selon la revendication 1,
**caractérisée en ce que** l'élément de cadre (3) tubulaire présente une section transversale (4) sensiblement octogonale.

3. Trousse (1) pour un appareil sensible aux chocs selon l'une quelconque des revendications 1 à 2,
**caractérisée en ce que** l'élément de cadre (3) tubulaire présente un multiple d'une section transversale octogonale.

4. Trousse (1) pour un appareil sensible aux chocs selon l'une quelconque des revendications 1 à 3,
**caractérisée en ce que** la couture (5) est cousue, soudée ou collée.

5. Trousse (1) pour un appareil sensible aux chocs selon les revendications 1 à 4,
**caractérisée en ce que** l'élément de cadre (3) tubulaire présente un diamètre extérieur de 5 mm à 50 mm, de préférence de 10 mm.

6. Trousse (1) pour un appareil sensible aux chocs selon l'une quelconque des revendications 1 à 5,
**caractérisée en ce que** l'élément de cadre (3) tubulaire présente une épaisseur de paroi de 0,5 mm à 15 mm, de préférence de 1 mm.

7. Trousse (1) pour un appareil sensible aux chocs selon l'une quelconque des revendications 1 à 6,
**caractérisée en ce que** l'élément de cadre (3) tubulaire est réalisé en métal léger, aluminium, matière plastique, caoutchouc, mousse, gomme et/ou une combinaison des matériaux.

8. Trousse (1) pour un appareil sensible aux chocs selon l'une quelconque des revendications 1 à 7,
**caractérisée en ce que** l'élément de cadre (3) tubulaire présente un tissu sur la périphérie extérieure.

9. Trousse (1) pour un appareil sensible aux chocs selon l'une quelconque des revendications 1 à 8,
**caractérisée en ce que** l'élément de cadre (3) tubulaire est muni d'une fermeture agrippante du moins dans des zones partielles de la périphérie extérieure.

10. Trousse (1) pour un appareil sensible aux chocs selon l'une quelconque des revendications 1 à 9,
**caractérisée en ce que** l'élément de cadre (3) tubulaire est muni d'une fermeture agrippante (9) du moins au niveau de l'une de ses extrémités (7).

11. Trousse (1) pour un appareil sensible aux chocs selon l'une quelconque des revendications 1 à 10,
**caractérisée en ce qu'**en plus de l'enveloppe extérieure (2) un cadre en bois, métal et/ou matière plastique est prévu.

12. Trousse (1) pour un appareil sensible aux chocs selon l'une quelconque des revendications 1 à 10,
**caractérisée en ce que** l'enveloppe extérieure (2) est réalisée en matière plastique, cuir, tissu et/ou par une feuille.

13. Trousse (1) pour un appareil sensible aux chocs selon l'une quelconque des revendications 1 à 12,
**caractérisée en ce que** l'enveloppe extérieure (2) présente sur la face intérieure au moins un élément de fixation pour un élément de cadre.

14. Trousse (1) pour un appareil sensible aux chocs selon l'une quelconque des revendications 1 à 13,
**caractérisée en ce que** l'élément de fixation présente la forme d'une fermeture agrippante (10).

15. Trousse (1) pour un appareil sensible aux chocs selon l'une quelconque des revendications 1 à 14,
**caractérisée en ce que** l'élément de fixation présente la forme d'un bouton-poussoir.

16. Trousse (1) pour un appareil sensible aux chocs selon l'une quelconque des revendications 1 à 15,
**caractérisée en ce que** les éléments de cadre sont disposés entre une enveloppe extérieure (2) et une enveloppe intérieure (11).

17. Trousse (1) pour un appareil sensible aux chocs selon l'une quelconque des revendications 1 à 16,
**caractérisée en ce qu'**au moins deux éléments de cadre (3) sont juxtaposés.

18. Trousse (1) pour un appareil sensible aux chocs selon l'une quelconque des revendications 1 à 17,
**caractérisée en ce que** des éléments de cadre (3) sont disposés au moins sur la face inférieure de la trousse.

19. Trousse (1) pour un appareil sensible aux chocs selon l'une quelconque des revendications 1 à 18,
**caractérisée en ce que** les extrémités de l'élément de cadre (3) tubulaire sont fermées du moins approximativement de manière hermétique.

20. Trousse (1) pour un appareil sensible aux chocs selon l'une quelconque des revendications 1 à 19,
**caractérisée en ce qu'**au moins un élément de cadre (3) est disposé dans un évidement (14) prévu dans l'enveloppe extérieure (2) et/ou dans le cadre (13).
